**Europäisches Patentamt**

**European Patent Office**

**Office européen des brevets**

(19)

(11) Veröffentlichungsnummer: **0 305 782**
**A2**

(12) ## EUROPÄISCHE PATENTANMELDUNG

(21) Anmeldenummer: **88113045.4**

(22) Anmeldetag: **11.08.88**

(51) Int. Cl.⁴: **B03B 9/06**

(30) Priorität: **29.08.87 DE 3728899**

(43) Veröffentlichungstag der Anmeldung:
**08.03.89 Patentblatt 89/10**

(84) Benannte Vertragsstaaten:
**AT BE CH DE FR GB IT LI NL**

(71) Anmelder: **Saarberg-Fernwärme GmbH**
**Sulzbachstrasse 26**
**D-6600 Saarbrücken(DE)**

(72) Erfinder: **Knörzer, Wolfgang, Dipl.-Ing.**
**Am Lieschenfeld 1**
**D-6601 Schafbrücke(DE)**

(54) **Verfahren zur Gewinnung verwertbarer Produkte aus einem Gemenge von festen Abfallstoffen und Anlage zur Durchführung des Verfahrens.**

(57) Bei einem Verfahren zur Gewinnung verwertbarer Produkte aus einem Gemenge von festen Abfallstoffen, insbesondere aus Hausmüll, Gewerbemüll, Sperrmüll u.a., wobei die Abfallstoffe in mehreren Stufen maschinell aufbereitet werden sowie einer Anlage zur Durchführung des Verfahrens wird die nach zum Beispiel einer Siebung und/oder Grobzerkleinerung sowie nach einer Sichtung erhaltene Sichterleichtfraktion einer Selektivzerkleinerung unterworfen.

Das in der Selektivzerkleinerung abgetrennte Folienmaterial wird ohne weitere Nachbehandlung als Sekundärrohstoff für die Kunststoffindustrie verwendet, wobei es vorteilhafterweise einer Agglomeration bzw. Granulation unterzogen wird.

Das abgetrennte Fasermaterial gelangt direkt in eine Kompostierungsanlage oder wird nach einer Trocknung :
- zu Formkörpern gepreßt und als Brennstoff verwendet,
- zu Ballen gepreßt und als Sekundärrohstoff zum Beispiel für die Papierindustrie verwendet,
- ungepreßt als Bindemittel zum Beispiel für Öl verwendet.

EP 0 305 782 A2

## Verfahren zur Gewinnung verwertbarer Produkte aus einem Gemenge von festen Abfallstoffen und Anlage zur Durchführung des Verfahrens

Die Erfindung betrifft ein Verfahren zur Gewinnung verwertbarer Produkte aus einem Gemenge von festen Abfallstoffen, insbesondere aus Hausmüll, Gewerbemüll. Sperrmüll u.a., wobei die Abfallstoffe in mehreren Stufen maschinell aufbereitet werden sowie eine Anlage zur Durchführung des Verfahrens.

Aus der DE-PS 30 42 899 ist ein vergleichbares Verfahren bekannt, bei dem Müll, insbesondere Hausmüll, zerkleinert, gesiebt und gesichtet wird, um Papier und Folien aus dem Müll abzutrennen.

Nachteilig an diesem bekannten Verfahren ist, daß durch Siebung, Sichtung und Absaugung allein, also nach Korngröße, Dichte und Form der Partikel, keine saubere Trennung der beiden Müllbestandteile Papier und Folien möglich ist. Diese können allenfalls einer mit einer Rauchgaswäsche ausgestatteten Verbrennungsanlage, nicht aber einer sinnvollen Wiederverwertung als Sekundärrohstoff zugeführt werden. Die Trennung von Papier und Kunststoff in Fraktionen hoher Reinheit ist bis heute noch nicht zufriedenstellend gelöst.

Der Erfindung liegt somit die Aufgabe zugrunde, ein Verfahren zur Gewinnung verwertbarer Produkte aus einem Gemenge von Abfallstoffen sowie eine Anlage zur Durchführung des Verfahrens zu schaffen, bei denen die Abfallstoffe, insbesondere Papier und Folien, sauber getrennt und derart aufbereitet werden, daß sie einer sinnvollen Wiederverwertung zugeführt werden können.

Die Aufgabe wird erfindungsgemäß dadurch gelöst, daß die nach zum Beispiel einer Siebung und/oder Grobzerkleinerung sowie nach einer Sichtung erhaltene Sichterleichtfraktion einer Selektivzerkleinerung unterworfen wird.

Die Grobzerkleinerung und/oder die Siebung werden so ausgelegt, daß vorzugsweise eine Teilchengröße von 100 bis 300 mm erhalten wird, so daß die Abfallstoffe bei der Windsichtung noch gut in eine Schwerfraktion und eine Leichtfraktion zerlegt werden können.

Die Aufbereitung der Schwerfraktion wird selten wirtschaftlich vertretbar sein; daher kann sie beispielsweise in Wirbelschichtöfen oder auch in konventionellen Müllverbrennungsanlagen zusammen mit anderen Abfallstoffen zwecks Nutzwärmelieferung verbrannt werden.

Die eigentliche Trennung von Papier und Folien erfolgt in der Selektivzerkleinerung der Sichterleichtfraktion. Hier wird selektiv das Papier aufgrund seiner geringeren Reißfestigkeit bzw. Schmiegsamkeit beispielsweise durch die Schläger einer Mühle stärker zerkleinert als Kunststoffolien.

Gleichzeitig wird in derselben Verfahrensstufe eine Selektion des zerkleinerten Papiers durch Siebklassieren vorgenommen, welches noch durch einen durch einen Lüfter erzeugten Unterdruck unterstützt wird. Das Papier wird vorzugsweise auf 3 bis 5 mm, die Folien werden vorzugsweise bis 30 mm Teilchengröße zerkleinert und verlassen getrennt die Selektivzerkleinerung.

Das in der Selektivzerkleinerung abgetrennte Folienmaterial kann aufgrund seiner Reinheit von bis zu ca. 99 % ohne Nachbehandlung an die Kunststoffindustrie zur Wiederverwertung abgegeben werden. Vorteilhafterweise wird das Folienmaterial einer Agglomeration bzw. Granulation unterzogen, um es besser transportieren und handhaben zu können, wobei vor diesen Verfahrensschritten zur Qualitätsanhebung noch eine Auftrennung in die verschiedenen Kunststoffarten, beispielsweise Polyethylen, Polypropylen, Polyvenylchlorid und andere, erfolgen kann.

Das abgetrennte Fasermaterial kann aufgrund seines hohen organischen Anteils ebenfalls ohne Nachbehandlung direkt einer Kompostierungsanlage zugeführt werden.

Da das Fasermaterial aber auch einen hohen Reinheitsgrad (bis zu ca. 95 %) besitzt, kann es nach einer nachgeschalteten Trocknung verschiedenen Verwendungszwecken zugeführt werden, beispielsweise:

- In gepreßtem Zustand als lagerfähiger Brennstoff. Da fast alle Kunststoffolien abgetrennt wurden, tritt bei Verwendung dieser Preßformkörper keine nennenswerte Chlorwasserstoff- und Fluorwasserstoffentwicklung auf.

- Zu Ballen gepreßt als Sekundärrohstoff für die Papierherstellung. Der Reinigungsaufwand in der Papierfabrik ist gering.

- Loses Material in Säcken ist aufgrund der guten Saugfähigkeit durch zerfaserte Kanten als Bindemittel z. B. bei Ölunfällen verwendbar. Im Gegensatz zu chemischen Bindemitteln kann dieses Material nach der Anwendung zusammen mit dem aufgesaugten Öl verbrannt werden.

In der Verfahrensstufe Selektivzerkleinerung wird eine Siebhammermühle, vorzugsweise eine vertikale Bauart, eingesetzt. Schlagende Zerkleinerungsmaschinen erfüllen die Funktion besser als reißende. Das Siebklassieren während des Zerkleinerns - statt nach dem Zerkleinern - erhöht die Trennschärfe von Folien- und Fasermaterial.

Das Siebklassieren kann noch verbessert werden, indem man der Selektivzerkleinerung einen Lüfter nachschaltet. Gleichzeitig werden dadurch die Strömungswiderstände des pneumatischen Transportsystems, des Trockners und des Filters ausgeglichen.

Ein vorteilhafter Aufbau einer Anlage zur Durchführung des Verfahrens ist im Anspruch 10 beschrieben.

Das erfindungsgemäße Verfahren und die Anlage zur Durchführung des Verfahrens werden im folgenden anhand des beispielhaft gezeichneten Verfahrensschemas näher erläutert.

Müll 1, der bereits einige Vorbehandlungsstufen wie Handsortierung, Magnetabscheidung und Siebung durchlaufen hat, gelangt mit einer Teilchengröße von 100 bis 300 mm in einen Grobzerkleinerer 2, verläßt diesen mit einer Teilchengröße kleiner als 100 mm und wird einem Sichter 3, beispielsweise einem Rotationswindsichter, zugeführt. Dort wird der Müll 1 in eine Schwerfraktion 4, die verbrannt oder deponiert wird, und in eine Leichtfraktion 5 zerlegt.

Die Leichtfraktion wird in einen Selektivzerkleinerer 7, vorzugsweise in eine vertikale Siebhammermühle, eingespeist und unter Zuführung von Zuluft 6 in Folienmaterial 8, das in einer Agglomerier- bzw. Granulierstufe 9 zu einem Agglomerat bzw. Granulat 10 geformt und abtransportiert wird, und in Fasermaterial 11 zerlegt.

Das Fasermaterial 11 wird zusammen mit der Zuluft 6 von einem Lüfter 12 abgesaugt und über einen Trockner 14 einem Filter 15 zugeführt. Vor dem Trockner 14 kann das Fasermaterial auch zur Kompostierung 13 abgezweigt werden. Ein weiterer Lüfter 18 fördert Umluft 17 über einen Vorwärmer 19 vor dem Trockner 14 in den Kreislauf zurück, während Abluft 16 das System verläßt. Das im Filter 15 abgeschiedene getrocknete Fasermaterial 20 passiert eine Zellenradschleuse 21 und gelangt zu einem Stromteiler 22.

Dort wird der Stoffstrom in drei Stränge aufgeteilt:
Im ersten Strang wird er in einer Presse 23, beispielsweise einer Kollergangpresse, und einem Kühler 24 zu haltbaren Preßformkörpern 25 verarbeitet; im zweiten wird er mittels einer Ballenpresse 26 zu Ballen 27 verpreßt; im dritten wird er in einer Absackvorrichtung 28 lose in Säcke 29 verpackt.

## Legende

1 Müll
2 Grobzerkleinerer
3 Sichter
4 Schwerfraktion
5 Leichtfraktion
6 Zuluft
7 Selektivzerkleinerer
8 Folienmaterial
9 Agglomeration, Granulation
10 Agglomerat, Granulat
11 Fasermaterial
12 Lüfter
13 zur Kompostierung
14 Trockner
15 Filter
16 Abluft
17 Umluft
18 Lüfter
19 Vorwärmer
20 getrocknetes Fasermaterial
21 Zellenradschleuse
22 Stromteiler
23 Presse
24 Kühler
25 Preßformkörper
26 Ballenpresse
27 Ballen
28 Absackvorrichtung
29 Säcke

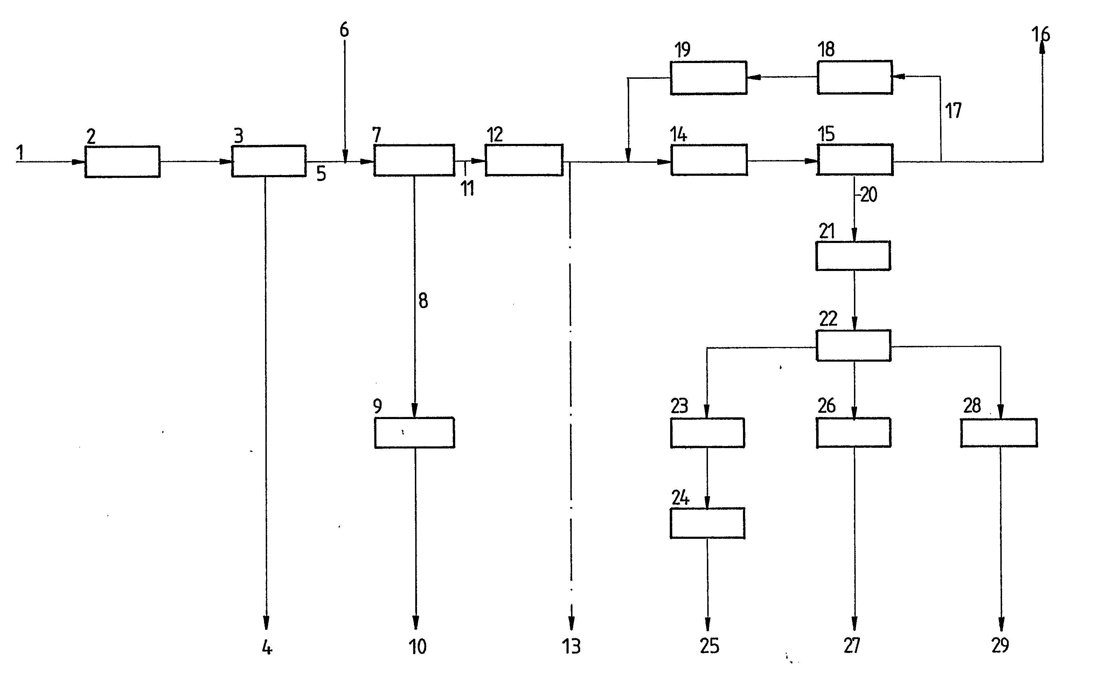

## Ansprüche

1. Verfahren zur Gewinnung verwertbarer Produkte aus einem Gemenge von festen Abfallstoffen, insbesondere aus Hausmüll, Gewerbemüll, Sperrmüll u.a., wobei die Abfallstoffe in mehreren Stufen maschinell aufbereitet werden, dadurch gekennzeichnet, daß die nach zum Beispiel einer Siebung und/oder Grobzerkleinerung sowie nach einer Sichtung erhaltene Sichterleichtfraktion einer Selektivzerkleinerung unterworfen wird.

2. Verfahren nach Anspruch 1, dadurch gekennzeichnet, daß in der Selektivzerkleinerung abgetrenntes Folienmaterial ohne weitere Nachbehandlung als Sekundärrohstoff für die Kunststoffindustrie verwendet wird.

3. Verfahren nach einem der Ansprüche 1 oder 2, dadurch gekennzeichnet, daß in der Selektivzerkleinerung abgetrenntes Fasermaterial als Kompostrohmasse verwendet wird.

4. Verfahren nach einem der Ansprüche 1 oder 2, dadurch gekennzeichnet, daß das in der Selektivzerkleinerung abgetrennte Fasermaterial getrocknet wird.

5. Verfahren nach einem der Ansprüche 1, 2 oder 4, dadurch gekennzeichnet, daß das Fasermaterial zu Formkörpern gepreßt und als Brennstoff verwendet wird.

6. Verfahren nach einem der Ansprüche 1, 2 oder 4, dadurch gekennzeichnet, daß das Fasermaterial zu Ballen gepreßt und als Sekundärrohstoff zum Beispiel für die Papierindustrie verwendet wird.

7. Verfahren nach einem der Ansprüche 1, 2 oder 4, dadurch gekennzeichnet, daß das Fasermaterial ungepreßt als Bindemittel zum Beispiel für Öl verwendet wird.

8. Verfahren nach einem der Ansprüche 1 bis 7, dadurch gekennzeichnet, daß die Selektivzerkleinerung in einer Siebhammermühle, vorzugsweise in einer vertikalen Siebhammermühle, erfolgt.

9. Verfahren nach einem der Ansprüche 1 bis 8, dadurch gekennzeichnet, daß der Selektivzerkleinerung ein Lüfter nachgeschaltet ist.

10. Anlage zur Durchführung des Verfahrens nach einem der Ansprüche 1 bis 9, dadurch gekennzeichnet, daß sie im Anschluß an zum Beispiel einen Grobzerkleinerer (2), einen Sichter (3), einen Selektivzerkleinerer (7), einen Lüfter (12), einen Trockner (14), einen Filter (15), eine Zellenradschleuse (21), einen Stromteiler (22) und/oder eine Presse (23) zur Herstellung von Preßformkörpern mit nachgeschaltetem Kühler (24) und/oder eine Ballenpresse (26) und/oder eine Absackvorrichtung (28) aufweist.